(19) Europäisches Patentamt / European Patent Office / Office européen des brevets

(11) **EP 4 174 980 A1**

(12) **EUROPEAN PATENT APPLICATION**
published in accordance with Art. 153(4) EPC

(43) Date of publication:
03.05.2023 Bulletin 2023/18

(21) Application number: 21830200.8

(22) Date of filing: 13.05.2021

(51) International Patent Classification (IPC):
*H01M 4/13* (2010.01)

(52) Cooperative Patent Classification (CPC):
H01M 4/13; H01M 4/131; H01M 4/136;
H01M 4/485; H01M 4/505; H01M 4/525;
H01M 4/58; H01M 10/0525; Y02E 60/10

(86) International application number:
PCT/CN2021/093563

(87) International publication number:
WO 2021/258900 (30.12.2021 Gazette 2021/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.06.2020 CN 202010585072

(71) Applicant: BYD Company Limited
Shenzhen, Guangdong 518118 (CN)

(72) Inventors:
• RUAN, Zewen
  Shenzhen, Guangdong 518118 (CN)
• CHEN, Na
  Shenzhen, Guangdong 518118 (CN)
• HAO, Rong
  Shenzhen, Guangdong 518118 (CN)
• PAN, Yi
  Shenzhen, Guangdong 518118 (CN)

(74) Representative: DehnsGermany Partnerschaft
von Patentanwälten
Theresienstraße 6-8
80333 München (DE)

(54) **POSITIVE ELECTRODE SHEET AND BATTERY**

(57)     Provided is a positive electrode plate, including a current collector and a positive electrode active layer arranged on the current collector. The positive electrode active layer includes m positive electrode active sub-layers. A positive electrode active material in each positive electrode active sub-layer includes a main positive electrode material and an auxiliary positive electrode material. The $D_{50}$ particle size of the main positive electrode material in the positive electrode active layer satisfies

$$1/(\sqrt{2}-1)^{n-1}D_{501} \leq D_{50}^n \leq 2(\sqrt{2}+1)^{n-1}D_{501}.$$ The $D_{90}$ particle size of the auxiliary positive electrode material is less than the $D_{10}$ particle size of the main positive electrode material in a first positive electrode active sub-layer.

FIG. 1

EP 4 174 980 A1

**Description**

**CROSS REFERENCE TO RELATED APPLICATIONS**

The present disclosure claims priority to and benefits of Chinese Patent Application No. 202010585072.2, filed by BYD Company Limited on June 24, 2020 and titled "POSITIVE ELECTRODE PLATE AND BATTERY".

**FIELD**

The present disclosure relates to the technical field of batteries, and more specifically, to a positive electrode plate and a battery.

**BACKGROUND**

Lithium ion batteries have the advantages of high energy density, small size, light weight, long cycle life, no memory effect and the like, and are widely used in portable electronic devices and new energy electric vehicle batteries. In the lithium battery system, layered positive electrode materials have become the focus of attention due to their advantages of high energy density, low cost, high platform voltage and the like. Especially, with the urgent demand of people for high energy density, higher requirements have been put forward for the surface density and compacted density of electrode plates. However, under high surface density and high compacted density, the migration path of lithium ions in the electrode plate far away from the electrolyte side is extended, the electrode plate partially has the problem of uneven lithium ion deintercalation/intercalation, and the speed for large and small particles in the electrode plate to be completely deintercalated/intercalated is inconsistent, resulting in uneven distribution of state of charge among particles, large battery impedance, poor rate and fast cycle attenuation, as well as potential safety hazards.

**SUMMARY**

The present disclosure is to resolve at least one of the technical problems in the related art. For this purpose, a first aspect of the present disclosure provides a positive electrode plate. The positive electrode plate includes a current collector and a positive electrode active layer arranged on the current collector. The positive electrode active layer includes m positive electrode active sub-layers. A positive electrode active material in each of the positive electrode active sub-layers includes a main positive electrode material and an auxiliary positive electrode material. The $D_{50}$ particle size of the main positive electrode material in the positive electrode active layer satisfies

$$1/(\sqrt{2}-1)^{n-1}D_{501} \leq D_{50}{}^{n} \leq 2(\sqrt{2}+1)^{n-1}D_{501},$$

where the m is an integer equal to or greater than 2, the n is any integer ranging from 2 to m, the $D_{501}$ represents the $D_{50}$ particle size of the main positive electrode material in a first positive electrode active sub-layer, the $D_{50}{}^{n}$ represents the $D_{50}$ particle size of the main positive electrode material in an nth positive electrode active sub-layer, and the distance between the nth positive electrode active sub-layer and the current collector is greater than the distance between a (n-1)th positive electrode active sub-layer and the current collector.

The $D_{90}$ particle size of the auxiliary positive electrode material is less than the $D_{10}$ particle size of the main positive electrode material in the first positive electrode active sub-layer.

A second aspect of the present disclosure provides a battery, including the positive electrode plate as described above.

The present disclosure has the following beneficial effects: in the positive electrode plate provided by the present disclosure, by setting the particle size of the main positive electrode material in each of the positive electrode active sub-layers of the positive electrode active layer to satisfy $1/(\sqrt{2}-1)^{n-1}D_{501} \leq D_{50}{}^{n} \leq 2(\sqrt{2}+1)^{n-1}D_{501}$, the particle size of the main positive electrode material of the positive electrode active layer is gradually increased from the side adjacent to the current collector to the side far from the current collector, so that the lithium ion deintercalation/intercalation speed in the entire positive electrode active layer is uniform, the charge distribution between adjacent particles in the thickness direction of the positive electrode plate is uniform, and the polarization caused by different state of charge in the thickness direction of the positive electrode plate and different state of charge between large and small particles can be reduced; and by filling the small auxiliary positive electrode material particles in the gap between the large main positive electrode material particles, the compacted density of the positive electrode plate can be effectively increased.

## BRIEF DESCRIPTION OF THE DRAWINGS

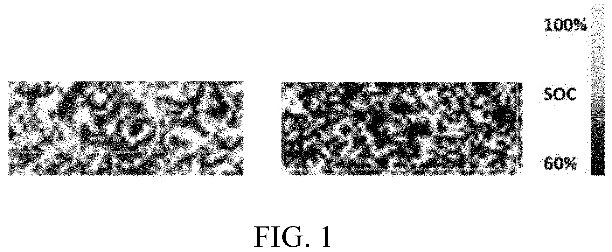

FIG. 1 illustrates Raman spectral images of micro-region of positive electrode plates prepared in an example and a comparative example provided in the present disclosure.

## DETAILED DESCRIPTION

The following descriptions are preferred embodiments of the present disclosure. It should be noted that a person of ordinary skill in the art may make various improvements and modifications without departing from the principles of the present disclosure, and such improvements and modifications shall all fall within the protection scope of the present disclosure.

An example of the present disclosure provides a positive electrode plate. The positive electrode plate includes a current collector and a positive electrode active layer arranged on the current collector. The positive electrode active layer includes m positive electrode active sub-layers. A positive electrode active material in each of the positive electrode active sub-layers includes a main positive electrode material and an auxiliary positive electrode material. The $D_{50}$ particle size of the main positive electrode material in the positive electrode active layer satisfies:

$$1/(\sqrt{2}-1)^{n-1}D_{501} \leq D_{50}^{n} \leq 2(\sqrt{2}+1)^{n-1}D_{501} \text{ (relational expression I),}$$

where the m is an integer equal to or greater than 2, the n is any integer ranging from 2 to m, the $D_{501}$ represents the $D_{50}$ particle size of the main positive electrode material in a first positive electrode active sub-layer, the $D_{50}^{n}$ represents the $D_{50}$ particle size of the main positive electrode material in an nth positive electrode active sub-layer, and the distance between the nth positive electrode active sub-layer and the current collector is greater than the distance between a (n-1)th positive electrode active sub-layer and the current collector.

The $D_{90}$ particle size of the auxiliary positive electrode material is less than the $D_{10}$ particle size of the main positive electrode material in the first positive electrode active sub-layer. That is, the particle size of the auxiliary positive electrode material and the particle size of the main positive electrode material in the first positive electrode active sub-layer satisfy $D_{90}^{auxiliary} < D_{101}$, where the $D_{90}^{auxiliary}$ represents the $D_{90}$ particle size of the auxiliary positive electrode material, and the $D_{101}$ represents the $D_{10}$ particle size of the main positive electrode material in the first positive electrode active sub-layer.

The m positive electrode active sub-layers are arranged on the same side of the current collector. In the direction far away from the current collector, the m positive electrode active sub-layers successively include a first positive electrode active sub-layer, a second positive electrode active sub-layer ... a (m-1)th positive electrode active sub-layer and an mth positive electrode active sub-layer. The first positive electrode active sub-layer is in direct contact with the current collector. In an example, the m is an integer ranging from 3 to 6. In another example, the m is equal to 4.

The $D_{50}$ particle size of the main positive electrode material in the positive electrode active layer satisfies:

$$1/(\sqrt{2}-1)^{n-1}D_{501} \leq D_{50}^{n} \leq 2(\sqrt{2}+1)^{n-1}D_{501}$$ . That is to say, the $D_{50}$ particle size of any positive electrode active sub-layer of the m positive electrode active sub-layers and the $D_{50}$ particle size of the first positive electrode active sub-layer satisfy the relational expression I. From the relational expression I, it can be seen that the $D_{50}$ particle size from the first positive electrode active sub-layer to the mth positive electrode active sub-layer increases gradually, the $D_{50}$ particle size of the first positive electrode active sub-layer near the current collector is the smallest, and the $D_{50}$ particle size of the mth positive electrode active sub-layer farthest from the current collector is the largest. The middle layer shows a gradient distribution from small particle size to large particle size.

By adopting the gradient-distribution particle size relationship expressed by relational expression I, the particle size of the main positive electrode material of the positive electrode active layer increases gradually from the current collector to the side far from the current collector, so that the lithium ion deintercalation/intercalation speed in the entire positive electrode active layer is uniform, thus making the charge distribution between adjacent particles in the thickness direction of the positive electrode plate uniform, reducing the polarization caused by different state of charge in the thickness direction of the positive electrode plate and different state of charge between the large and small particles, improving the electric conductivity of the prepared battery, and improving the rate performance, the safety performance and the like of the prepared battery. The transmission of lithium ions in the battery is mainly affected by two aspects, one is solid phase diffusion, that is, the particle size of the active material in the electrode, the other is liquid phase diffusion, that is, the diffusion distance of lithium ions in the liquid phase environment. When the particle size of the positive electrode material particles at each position of the entire positive electrode active layer is not distributed according to the relational expression I, for example, the particle size of the positive electrode material particles in the entire positive electrode active layer is the same, the solid diffusion distance of lithium ions in the active material is the same, but the distances between the active material of different thickness of the electrode plate and the solid-liquid interface are different, resulting in different deintercalation/intercalation distances of lithium ions in the liquid phase. In this case, the lithium ion deintercalation/intercalation speed of the active material in the surface layer (near the separator) of the electrode plate is caused to be fast, while the lithium ion deintercalation/intercalation speed of the active material in the inner layer (near the current collector) of the electrode plate is caused to be slow, leading to uneven distribution of the state of charge between the active material particles, resulting in large battery impedance, poor rate and fast cycle attenuation. The deintercalation/intercalation speed of the lithium ions of large positive electrode material particles is slower than that of small main positive electrode material particles, leading to uneven distribution of the state of charge among the positive electrode material particles, resulting in large battery impedance, poor rate and fast cycle attenuation.

Generally speaking, the lithium ion deintercalation/intercalation speed of the large positive electrode material particles is slower, while the lithium ion deintercalation/intercalation speed of the small positive electrode material particles is faster. In the present disclosure, the particle size of the main positive electrode material particles in the positive electrode active sub-layer adjacent to the electrolyte (far from the side of the current collector) is set to be larger, and the particle size of the main positive electrode material particles in the positive electrode active sub-layer far from the electrolyte (near the side of the current collector) is set to be smaller. In this way, the lithium ion deintercalation/intercalation speed of the large main positive electrode material particles adjacent to the electrolyte is equivalent to the lithium ion deintercalation/intercalation speed of the small main positive electrode material particles far from the electrolyte, so that the lithium ion deintercalation/intercalation speed of the positive electrode active material in each of the positive electrode active sub-layers is the same, thus improving the consistency of the lithium ion deintercalation/intercalation speed of the overall positive electrode active layer.

For example, the particle size of the main positive electrode material particles in the first positive electrode active sub-layer is the smallest, and the time for lithium ions to release from the main positive electrode material particles is short, but the first positive electrode active sub-layer is the farthest from the electrolyte, and the released lithium ions take longer time to enter the electrolyte. The particle size of the main positive electrode material particles in the mth positive electrode active sub-layer is the largest, and the lithium ions take longer time to release from the main positive electrode material particles, but the mth positive electrode active sub-layer is the closest to the electrolyte, and the lithium ions only take shorter time to enter the electrolyte. It can be seen that the total time for the lithium ions to release from the main positive electrode material particles of the first positive electrode active sub-layer and arrive at the electrolyte tends to be the same as the total time for the lithium ions to release from the main positive electrode material particles of the mth positive electrode active sub-layer and arrive at the electrolyte, that is, the deintercalation/intercalation speed of the lithium ions in the first positive electrode active sub-layer is equivalent to the deintercalation/intercalation speed of the lithium ions in the mth positive electrode active sub-layer. Similarly, the deintercalation/intercalation speed of the lithium ions in the second positive electrode active sub-layer is equivalent to that in the (m-1)th positive electrode active sub-layer, and the deintercalation/intercalation speed of the lithium ions in adjacent nth and (n-1)th positive electrode active sub-layers is also equivalent, or the deintercalation/intercalation speed of the lithium ions in any two positive electrode active sub-layers of the positive electrode active layer is equivalent. Therefore, for the entire positive electrode active layer, the $D_{50}$ particle size of the main positive electrode material in each of the positive electrode active sub-layer of the positive electrode active layers is distributed according to the above relational expression, so that the deintercalation/intercalation speed of the lithium ions in the entire positive electrode active layer is uniform, thus making the charge distribution between adjacent particles in the thickness direction of the positive electrode plate uniform, and reducing the polarization caused by different state of charge in the thickness direction of the positive electrode plate and different state of charge between the large and small particles.

In addition, the positive electrode active material in the present disclosure is also provided with an auxiliary positive electrode material layer. The particle size of the auxiliary positive electrode material and the particle size of the main positive electrode material in the first positive electrode active sub-layer satisfy: $D_{90}^{auxiliary} < D_{101}$, that is, the particle size of 90% of the auxiliary positive electrode material is less than the particle size of 10% of the main positive electrode material in the positive electrode active sub-layer, and the small auxiliary positive electrode material particles are distributed in the gaps between the large main positive electrode material particles in each of the positive electrode active sub-layers, thus effectively increasing the compacted density of the positive electrode plate.

In the present disclosure, the main positive electrode material is preferably a layered positive electrode material, and the auxiliary positive electrode material is preferably a polyanion positive electrode material. The polyanion positive electrode material has excellent structural stability. The polyanion positive electrode is not easy to react with the electrolyte, or has little impact on the structure of the positive electrode active layer when reacting with the electrolyte, and will not damage the structural stability of the positive electrode active layer. The cycle and safety performance of the positive electrode plate can be improved by the joint use of the polyanion positive electrode material and the layered positive electrode material. The layered positive electrode material may be a layered positive electrode material formed by coating and compacting the main positive electrode material.

In the positive electrode plate provided by the present disclosure, under the situation that the particle size of the main positive electrode material in each of the positive electrode active sub-layers of the positive electrode active layer is set to satisfy the above relational expression I, and the small auxiliary positive electrode material particles are also filled in the gap among the large main positive electrode material particles, the uniformity of the charge distribution between adjacent particles in the thickness direction of the positive electrode plate is improved, and the polarization caused by different state of charge in the thickness direction of the positive electrode plate and different state of charge between the large and small particles, thus further effectively increasing the compacted density of the positive electrode plate.

In an example, the $D_{50}$ particle size of the auxiliary positive electrode material is less than or equal to 200 nm. That is, the particle size of the auxiliary positive electrode material satisfies $D_{50}^{auxiliary} \leq 200$ nm, and the $D_{50}^{auxiliary}$ represents the $D_{50}$ particle size of the auxiliary positive electrode material. When the $D_{50}$ particle size of the auxiliary positive electrode material is less than or equal to 200 nm, the auxiliary positive electrode material can be better distributed among the main positive electrode material particles, thus further improving the compacted density of the positive electrode plate.

In an example, the $D_{90}$ particle size of the main positive electrode material in the (n-1)th positive electrode active sub-layer is less than or equal to the $D_{10}$ particle size of the main positive electrode material in the nth positive electrode active sub-layer. That is, the particle size of the main positive electrode material in the (n-1)th positive electrode active sub-layer and the particle size of the main positive electrode material in the nth positive electrode active sub-layer satisfy $D_{90}^{n-1} \leq D_{10}^n$, where $D_{90}^{n-1}$ represents the $D_{90}$ particle size of the main positive electrode material in the (n-1)th positive electrode active sub-layer, and $D_{10}^n$ represents the $D_{10}$ particle size of the main positive electrode material in the nth positive electrode active sub-layer. The particle size of 90% of the main positive electrode material in the (n-1) th positive electrode active sub-layer is smaller than the particle size of 10% of the main positive electrode material in the nth positive electrode active sub-layer. In this way, it is ensured that the particle size of the main positive electrode material particles in the adjacent two layers gradually transitions from small particle size to large particle size. For the entire positive electrode active layer, it can further improve the gradient regularity of the particle size distribution of the main positive electrode material particles in each of the positive electrode active sub-layers.

In an example, the particle size of the main positive electrode material in the positive electrode active layer further satisfies $4.0\ \mu m \leq D_{50}^{[m/2]+1} \leq 8.0\ \mu m$, the [m/2] represents rounding down, and the $D_{50}^{[m/2]+1}$ represents the $D_{50}$ particle size of the main positive electrode material in a ([m/2]+1)th positive electrode active sub-layer. For example, when the m is 4, the particle size of the main positive electrode material in the positive electrode active layer satisfies $4.0\ \mu m \leq D_{50}3 \leq 8.0\ \mu m$. That is to say, the $D_{50}$ particle size of the third positive electrode active sub-layer is between 4.0 $\mu m$ and 8.0 $\mu m$. When the m is 5, the particle size of the main positive electrode material in the positive electrode active layer satisfies $4.0\ \mu m \leq D_{50}3 \leq 8.0\ \mu m$. That is to say, the $D_{50}$ particle size of the third positive electrode active sub-layer is between 4.0 $\mu m$ and 8.0 $\mu m$.

The above setting defines the particle size of the main positive electrode material close to the middle layer or in the middle layer. The particle size distribution of the main positive electrode material in the first positive electrode active sub-layer to the last positive electrode active sub-layer can be known through the relational expression I of particle size distribution of the sub-layers.

In an example, in the positive electrode active layer, the percentage of the surface density of the main positive electrode material in each of the first positive electrode active sub-layer to an mth positive electrode active sub-layer to the surface density of the main positive electrode material in the positive electrode active layer shows a normal distribution. Here, the surface density of the main positive electrode material in the positive electrode active layer refers to the mass of the main positive electrode material in the positive electrode active layer on a unit area under a specified thickness, and the surface density of the main positive electrode material in the positive electrode active sub-layer refers to the mass of the main positive electrode material in the positive electrode active sub-layer on a unit area under a specified thickness.

That is to say, the surface densities of the main positive electrode material in the positive electrode active sub-layer at both ends of the positive electrode active layer are small, and the surface density of the main positive electrode material in the positive electrode active sub-layer of the middle layer is large. This distribution can improve the uniformity of the charge distribution between adjacent particles in the thickness direction of the positive electrode plate. Since the particle size difference of the main positive electrode material in the positive electrode active sub-layers at both ends is the largest, and the deintercalation/intercalation speed difference of the lithium ions of the main positive electrode material particles at both ends is the largest, the surface density of the main positive electrode material in the positive electrode active sub-layers at both ends is set to be smaller, thus reducing the amount of the main positive electrode material particles with large lithium ion deintercalation/intercalation speed difference at both ends, improving the consistency of lithium ion deintercalation/intercalation speed in the entire positive electrode active layer, and improving the charge distribution uniformity between adjacent particles in the thickness direction of the positive electrode plate.

In an example, in the positive electrode active layer, the percentage of the surface density of the main positive electrode material in each of the positive electrode active sub-layers to the surface density of the main positive electrode material in the positive electrode active layer satisfies:

$$\rho^1 \leq 10.0\%, \rho^m \leq 10.0\%;$$

$$\rho^2 \geq 10.0\%, \rho^{m-1} \geq 10.0\%;$$

$$40.0\% \leq \rho^{m/2} \leq 60.0\%,$$

where the m is an integer equal to or greater than 3, the $\rho^1$ represents the percentage of the surface density of the main positive electrode material in the first positive electrode active sub-layer to the surface density of the main positive electrode material in the positive electrode active layer, the $\rho^2$ represents the percentage of the surface density of the main positive electrode material in the second positive electrode active sub-layer to the surface density of the main positive electrode material in the positive electrode active layer, the $\rho^m$ represents the percentage of the surface density of the main positive electrode material in the mth positive electrode active sub-layer to the surface density of the main positive electrode material in the positive electrode active layer, and the $\rho^{m-1}$ represents the percentage of the surface density of the main positive electrode material in the (m-1)th positive electrode active sub-layer to the surface density of the main positive electrode material in the positive electrode active layer. When the m is an odd number, the $\rho^{m/2}$ represents the percentage of the surface density of the main positive electrode material in the ([m/2]+1)th positive electrode active sub-layer to the surface density of the main positive electrode material in the positive electrode active layer, and the [m/2] represents rounding down; and when the m is an even number, the $\rho^{m/2}$ represents the percentage of the surface density of the main positive electrode material in at least one of the ([m/2])th positive electrode active sub-layer and the ([m/2]+1)th positive electrode active sub-layer to the surface density of the main positive electrode material in the positive electrode active layer.

For example, when the m is equal to 4, $\rho^1$=8%, $\rho^2$=45%, $\rho^3$=38%, and $\rho^4$=9%.

When the m is equal to 5, $\rho^1$=8%, $\rho^2$=17%, $\rho^3$=50%, $\rho^4$=17%, and $\rho^5$=8%. When the m is equal to 6, $\rho^1$=5%, $\rho^2$=10%, $\rho^3$=40%, $\rho^4$=30%, $\rho^5$=10%, and $\rho^6$=5%. That is, the surface densities of the main positive electrode material in the positive electrode active sub-layers at both ends are small, and the surface density of the main positive electrode material in the positive electrode active sub-layer in the middle is large.

In an example, each of the positive electrode active sub-layers further includes a conductive agent and a binder.

Preferably, the surface density of the positive electrode active layer satisfies 300 g/m$^2 \leq \rho \leq$ 500 g/m$^2$, where the $\rho$ represents the surface density of the positive electrode active layer. The positive electrode active layer includes a main positive electrode material, an auxiliary positive electrode material, a conductive agent and a binder. The surface density of the positive electrode active layer refers to the mass of all of the main positive electrode material, the auxiliary positive electrode material, the conductive agent and the binder in the positive electrode active layer on a unit area under a specified thickness.

In the present disclosure, the surface density of the positive electrode active layer is large and between 300 g/m$^2$ and 500 g/m$^2$, so that the positive electrode active layer has a high electric capacity. On the other hand, the positive electrode active layer with higher surface density has a greater thickness on the positive electrode plate with the same area. In the present disclosure, the larger the thickness of the positive electrode active layer, the more obvious the improvement of the distribution of the state of charge among the positive electrode material particles of the positive electrode plate is obtained by adopting the relational expression I of particle size distribution of each of the positive electrode active sub-layers. In other words, the thicker the positive electrode plate is, the more obvious the effect of improving the electric performance of the positive electrode plate is when the setting of the relational expression I is adopted. Specifically, the impedance of the positive electrode plate can be reduced, the charge uniformity of the positive electrode plate can be improved, and the rate performance of the prepared battery can be improved.

The conductive agent is at least one of conductive carbon black, acetylene black, carbon nanotubes and graphene. The binder is polyvinylidene fluoride or a copolymer containing vinylidene fluoride.

In an example, the surface density of the positive electrode active layer satisfies 350 g/m$^2 \leq \rho \leq$ 450 g/m$^2$. In another example, the surface density of the positive electrode active layer satisfies 400 g/m$^2 \leq \rho \leq$ 450 g/m$^2$.

In an example, the mass of the auxiliary positive electrode material accounts for 0.5%-20.0% of the mass of the positive electrode active material in the positive electrode active layer. By adopting the above mass ratio, the compacted density of the obtained positive electrode plate is better.

In another example, the mass of the auxiliary positive electrode material accounts for 4.0%-12.0% of the mass of the positive electrode active material in the positive electrode active layer.

In an example, the layered positive electrode material is at least one of lithium cobaltate, lithium nickelate, lithium manganate, lithium nickel cobalt manganate and lithium nickel cobalt aluminate; and the polyanion positive electrode material is at least one of lithium iron phosphate, lithium manganese iron phosphate, lithium manganese phosphate, lithium vanadium phosphate, lithium vanadium fluorophosphate, lithium manganese silicate, lithium iron silicate and lithium cobalt silicate.

The present disclosure further provides a battery, including the positive electrode plate as described in the above examples. Arranging the electrode plate in the battery can reduce the polarization caused by different charge in the thickness direction of the positive electrode plate and different charge between the large and small particles, eliminate the polarization caused by the uneven lithium ion deintercalation/intercalation, reduce the impedance of the battery, and improve the electrochemical performance and cycle performance of the battery at different rates.

In order to better describe the technical solution of the present disclosure, description will be made below in combination with multiple specific examples.

Example 1

(1) A positive electrode active material, a conductive agent and a binder were dissolved in a solvent of N-methylpyrrolidone according to a mass ratio of 94:3.0:3.0, and were uniformly dispersed to prepare slurry. The positive electrode active material included a layered positive electrode material and a polyanion positive electrode material. The layered positive electrode material was $LiNi_{0.83}Co_{0.13}Mn_{0.04}O_2$. The polyanion positive electrode material was a lithium iron phosphate positive electrode material. The mass percentage of the lithium iron phosphate positive electrode material in the positive electrode active material was 6.5%.

(2) First positive electrode slurry was prepared according to the above steps. The first positive electrode slurry contained $LiNi_{0.83}Co_{0.13}Mn_{0.04}O_2$ with $D_{50}=0.80$ $\mu$m and a lithium iron phosphate positive electrode with $D_{50}=200$ nm.

Second positive electrode slurry was prepared according to the above steps. The second positive electrode slurry contained $LiNi_{0.83}Co_{0.13}Mn_{0.04}O_2$ with $D_{50}=2.2$ $\mu$m and a lithium iron phosphate positive electrode with $D_{50}=200$ nm.

Third positive electrode slurry was prepared according to the above steps. The third positive electrode slurry contained $LiNi_{0.83}Co_{0.13}Mn_{0.04}O_2$ with $D_{50}=5.2$ $\mu$m and a lithium iron phosphate positive electrode with $D_{50}=200$ nm.

Fourth positive electrode slurry was prepared according to the above steps. The fourth positive electrode slurry contained $LiNi_{0.83}Co_{0.13}Mn_{0.04}O_2$ with $D_{50}=12.0$ $\mu$m and a lithium iron phosphate positive electrode with $D_{50}=200$ nm.

(3) The first positive electrode slurry, the second positive electrode slurry, the third positive electrode slurry and the fourth positive electrode slurry were successively coated on a current collector to form a first positive electrode active sub-layer, a second positive electrode active sub-layer, a third positive electrode active sub-layer and a fourth positive electrode active sub-layer. The 4 positive electrode active sub-layers formed a positive electrode active layer of a positive electrode plate. The positive electrode plate coated with 4 layers of slurry was continuously vibrated to make the particle size of the positive electrode active material particles in each positive electrode active sub-layer of the positive electrode plate show a gradient distribution, so as to reduce the difference of particle size in interface layers.

(4) After baking and rolling, the positive electrode plate was cut into specific sizes for use. The surface density of the main positive electrode material in the first positive electrode active sub-layer, the second positive electrode active sub-layer, the third positive electrode active sub-layer and the fourth positive electrode active sub-layer above respectively accounted for 8.0%, 45.0%, 38.0% and 9.0% of the surface density of the main positive electrode material in the positive electrode active layer. The surface density of the positive electrode active layer was 420 g/m$^2$. The $D_{50}$ particle size of $LiNi_{0.83}Co_{0.13}Mn_{0.04}O_2$ in the above four positive electrode active sub-layers satisfied

$$1/(\sqrt{2}-1)^{n-1}D_{501}\leq D_{50n}\leq 2(\sqrt{2}+1)^{n-1}D_{501}$$ .

Example 2

A positive electrode plate was prepared by adopting the same method in example 1, the difference was that the number of the $D_{50}$ particle sizes of the layered positive electrode material selected for preparing the positive electrode active sub-layers was 3, the $D_{50}$ particle sizes of the layered positive electrode material in the first positive electrode active sub-layer, the second positive electrode active sub-layer and the third positive electrode active sub-layer were 2.0 $\mu$m, 6.5 $\mu$m and 15.0 $\mu$m respectively, and the $D_{50}$ particle sizes in the 3 layers satisfied relational expression I.

Other conditions were the same as those in example 1. The positive electrode plate was obtained.

Example 3

A positive electrode plate was prepared by adopting the same method in example 1, the difference was that the number of the $D_{50}$ particle sizes of the layered positive electrode material selected for preparing the positive electrode active sub-layers was 5, the $D_{50}$ particle sizes of the layered positive electrode material in the first positive electrode active sub-layer, the second positive electrode active sub-layer, the third positive electrode active sub-layer, the fourth positive electrode active sub-layer and the fifth positive electrode active sub-layer were 0.5 $\mu$m, 1.5 $\mu$m, 4.5 $\mu$m, 8.0 $\mu$m and 18.0 $\mu$m respectively, and the $D_{50}$ particle sizes in the 5 layers satisfied relational expression I. Other conditions were the same as those in example 1. The positive electrode plate was obtained.

Example 4

A positive electrode plate was prepared by adopting the same method in example 1, the difference was that the $D_{50}$ particle size of lithium iron phosphate was 125 nm. The positive electrode plate was obtained.

Example 5

A positive electrode plate was prepared by adopting the same method in example 1, the difference was that the $D_{50}$ particle size of lithium iron phosphate was 300 nm. The positive electrode plate was obtained.

Example 6

A positive electrode plate was prepared by adopting the same method in example 1, the difference was that the layered positive electrode material selected was a mixture of lithium cobaltate and lithium nickel cobalt aluminate with a molar ratio of 1:1. The positive electrode plate was obtained.

Example 7

A positive electrode plate was prepared by adopting the same method in example 1,. the difference was that the content of lithium iron phosphate in the positive electrode active material was 15.0%. The positive electrode plate was obtained.

Example 8

A positive electrode plate was prepared by adopting the same method in example 1, the difference was that the content of lithium iron phosphate in the positive electrode active material was 2.0%. The positive electrode plate was obtained.

Example 9

A positive electrode plate was prepared by adopting the same method in example 1, the difference was that the polyanion in the positive electrode active material was lithium manganese iron phosphate. The positive electrode plate was obtained.

Comparative example 1

A positive electrode plate was prepared by adopting the same method in example 1, the difference was that the positive electrode active material only contained $LiNi_{0.83}Co_{0.13}Mn_{0.04}O_2$ with $D_{50}=5.4$ $\mu$m. The positive electrode plate was obtained.

Comparative example 2

A positive electrode plate was prepared by adopting the same method in example 1, the difference was that the positive electrode active material did not contain the polyanion positive electrode. The positive electrode plate was obtained.

Comparative example 3

A positive electrode plate was prepared by adopting the same method in example 1, the difference was that the positive electrode active material only contained $LiNi_{0.83}Co_{0.13}Mn_{0.04}O_2$ with $D_{50}$=5.4 μm and the positive electrode active material did not contain the polyanion positive electrode. The positive electrode plate was obtained.

Comparative example 4

A positive electrode plate was prepared by adopting the same method in example 1, the difference was that the number of the $D_{50}$ particle sizes of the layered positive electrode material selected for preparing the positive electrode active sub-layers was 4, and the $D_{50}$ particle sizes of $LiNi_{0.83}Co_{0.13}Mn_{0.04}O_2$ in the first positive electrode active sub-layer, the second positive electrode active sub-layer, the third positive electrode active sub-layer and the fourth positive electrode active sub-layer were 0.6 μm, 3.0 μm, 7.0 μm and 20.0 μm respectively. The positive electrode plate was obtained.

The positive electrode plates in examples 1 to 9 and in comparative examples 1 to 4 above were used to prepare batteries to obtain the corresponding batteries according to the following method: the positive electrode plate, the separator and the negative electrode plate were stacked sequentially to obtain a bare battery core, then the battery core was put into a housing, baking and drying were performed, electrolyte was injected, welding and sealing were performed, and high-temperature aging, formation and aging processes were performed to obtain a battery.

Performance tests, including impedance performance test, rate performance test, cycle performance test, safety performance test and state of charge performance test, were performed on the batteries prepared by adopting the corresponding positive electrode plates in examples 1 to 9 and comparative examples 1 to 4 above. See FIG. 1 and Table 1 for specific data.

Impedance performance test method: at 25°C, the battery was fully charged with 0.2C constant current and constant voltage, and then discharged to 2.5 V with 0.2C constant current after shelving, the operation was repeated for 3 times, the discharge capacity at the 3rd time was recorded as C0, the battery was adjusted to 50% SOC with 0.2C0 current, and then 1.5C constant current discharge for 30s was tested to calculate the impedance value.

Rate performance test method: at 25°C, the battery was fully charged with 0.2C constant current and constant voltage, and then discharged to 2.5 V with 0.2C constant current after shelving, the operation was repeated for 3 times, the discharge capacity at the 3rd time was recorded as C0, the battery was fully charged with 0.2C0 and 5.0C0 constant current and constant voltage respectively, and then was fully discharged with the same current, the 0.2C0 discharge capacity was used as the benchmark, and the ratio of the 5.0C0 discharge capacity to the 0.2C0 discharge capacity was used as the indicator to evaluate the rate performance.

Cycle performance test method: at 25°C, the battery was fully charged with 0.2C constant current and constant voltage, and then discharged to 2.5 V with 0.2C constant current after shelving, the operation was repeated for 3 times, the discharge capacity at the 3rd time was recorded as C0, the battery was fully charged with 1.0C0 constant current and constant voltage in a 45°C environment, and then was discharged with 1.0C0 constant current, 500 cycles were performed, and the capacity retention rate was recorded.

Safety performance test method: the electrode stability was tested by DSC as the indicator to evaluate the safety performance, the battery was fully charged, the positive electrode plate was taken out in a glove box, an appropriate amount of the positive electrode material was scraped and put into a crucible, a certain amount of electrolyte was added, the crucible was transferred to a device, the test atmosphere was pure argon, the heating rate was 2°C/min, and the initial temperature of thermal runaway, the peak temperature of thermal runaway, and the exothermic power were recorded respectively.

State of charge (SOC) performance test method: the battery was fully charged rapidly with 2.0C current, the positive electrode plate was taken out in a glove box and cut with an Ar ion beam to obtain an electrode plate section, and then the electrode plate section was placed on the Raman spectrum for cross-section scanning. The vibration energy levels of different metals and oxygen/different-valence metals and oxygen are different, and the peak position, peak type and peak intensity in the Raman spectrum are different. The area ratio of 550 cm$^{-1}$ peak to 470 cm$^{-1}$ peak was used as the indicator to evaluate the SOC. The ratio of each point in the scanning area could be obtained, so that the distribution of the SOC in the area could be obtained, and then the average value of the SOC in the area could be calculated to characterize the actual SOC of the electrode plate.

Please refer to FIG. 1. In FIG. 1, the left side is the SOC distribution of the battery prepared corresponding to example 1, and in FIG. 1, the right side is the SOC distribution of the battery prepared corresponding to comparative example 3. It can be seen that the SOC distribution in the positive electrode plate prepared according to example 1 is obviously more uniform, indicating that the positive electrode plate has less polarization, and is more conducive to the intercalation/deintercalation of lithium ions.

Table 1

| S/N | Impedance (m·Ω) | Rate (%) | Capacity retention rate (%) | DSC | | | SOC (%) |
|---|---|---|---|---|---|---|---|
| | | | | Initial temperature of thermal runaway (°C) | Peak temperature of thermal runaway (°C) | Exothermic power (J/g) | |
| Example 1 | 154 | 98.5 | 92.1 | 201.5 | 207.5 | 1027.5 | 97.5 |
| Example 2 | 175 | 93.0 | 84.3 | 199.1 | 205.4 | 1026.5 | 89.2 |
| Example 3 | 177 | 92.5 | 83.5 | 199.8 | 206.2 | 1028.3 | 88.4 |
| Example 4 | 151 | 99.3 | 93.2 | 202.9 | 209.2 | 1027.5 | 98.7 |
| Example 5 | 181 | 91.4 | 82.0 | 198.7 | 204.9 | 1022.3 | 86.8 |
| Example 6 | 158 | 97.5 | 90.6 | 199.6 | 205.7 | 1030.4 | 95.9 |
| Example 7 | 201 | 86.2 | 87.1 | 204.2 | 210.2 | 948.4 | 92.2 |
| Example 8 | 171 | 94.0 | 85.8 | 197.1 | 203.1 | 1036.4 | 90.8 |
| Example 9 | 169 | 94.6 | 86.5 | 198.4 | 204.6 | 1033.6 | 91.6 |
| Example 1 | 154 | 98.5 | 92.1 | 201.5 | 207.5 | 1027.5 | 97.5 |
| Comparative example 1 | 195 | 87.8 | 76.8 | 199.5 | 205.5 | 1032.1 | 81.3 |
| Comparative example 2 | 189 | 89.3 | 79.1 | 196.5 | 202.5 | 1085.3 | 87.6 |
| Comparative example 3 | 220 | 81.2 | 67.5 | 196.8 | 202.3 | 1088.0 | 71.5 |
| Comparative example 4 | 238 | 75.5 | 68.4 | 195.7 | 201.8 | 1079.5 | 82.1 |

From Table 1, it can be seen that the effect of examples 1 to 9 is better than that of comparative examples 1-4. In an example, in terms of battery impedance, the lowest battery impedance value in examples 1 to 9 can reach 151 m•Ω, and the lower the battery impedance value is, the better the conductivity of the battery is; and in terms of rate performance, the highest rate ratio is 99.3%, and the lowest rate ratio is 86.2%. The higher the rate ratio is, the more stable the electrochemical performances of the battery at different rates are, that is, the better the rate performances are; in terms of cycle performance, the highest cycle capacity retention rate is 93.2%, the lowest cycle capacity retention rate is 82.0%, and the higher the cycle capacity retention rate is, the more stable the battery performance is, and the longer the service life is; in terms of safety performance, the maximum initial temperature of thermal runaway is 204.2°C, the maximum peak temperature of thermal runaway is 210.2°C, the minimum exothermic power is 948.4 J/g, the higher the initial temperature of thermal runaway and the peak temperature of thermal runaway are, the more high temperature resistant and safer the battery is, and the lower the exothermic power is, the less likely the battery is to generate heat and the safer it is; and in terms of SOC, the highest SOC is 98.7%, and the higher the SOC ratio is, the more uniform the SOC in the positive electrode plate is.

In regard to comparative example 1, since there is only one particle size of layered positive electrode material particles in the positive electrode active layer in comparative example 1 and the particle size distribution satisfying the relational expression I is not adopted as in example 1, the prepared battery is worse than that prepared in example 1 in terms of the impedance, rate, cycle capacity retention rate, safety performance and SOC. The battery impedance in comparative example 1 is 195 m•Ω, and is larger than that in example 1, indicating that the conductivity of the battery is reduced; and the rate is only 87.8%, the capacity retention rate is only 76.8%, the initial temperature and peak temperature of thermal runaway are lower than those in example 1, the exothermic power is greater than that in example 1, and the SOC ratio is lower than that in example 1.

In regard to comparative example 2, the polyanion positive electrode material is not added in comparative example 2, the compacted density of the positive electrode plate is affected, and then the conductivity of the positive electrode plate is affected. From the data of comparative example 2, it can be seen that the battery prepared in comparative example 2 is worse than that prepared in example 1 in terms of impedance, rate, cycle capacity retention rate, safety performance and SOC.

In regard to comparative example 3, there is only one particle size added in comparative example 3 and the polyanion positive electrode material is not added. From the data of comparative example 3, it can be seen that the battery prepared in comparative example 3 is worse than that prepared in example 1 in terms of impedance, rate, cycle capacity retention rate, safety performance and SOC.

In regard to comparative example 4, the $D_{50}$ particle size of $LiNi_{0.83}Co_{0.13}Mn_{0.04O2}$ in the four positive electrode active sub-layers in comparative example 4 does not satisfy the relational expression I in the present disclosure, that is, the particle size of the particles between the sub-layers does not show the regular distribution in the relational expression I. From the data of comparative example 4, it can be seen that the battery prepared in comparative example 4 is worse than that prepared in example 1 in terms of impedance, rate, cycle capacity retention rate, safety performance and SOC, indicating that setting the $D_{50}$ particle size of $LiNi_{0.83}Co_{0.13}Mn_{0.04O2}$ in each of the positive electrode active sub-layers according to the relational expression I in the present disclosure can improve the electric performance of the battery.

By comparing example 5 with example 1 and example 4, it can be seen that the performance of the positive electrode plate prepared by adopting lithium iron phosphate with $D_{50}$ particle size $\leq$ 200 nm is better.

By comparing example 7 and example 8 with example 1, it can be seen that the performance of the positive electrode plate prepared by adopting the lithium iron phosphate positive electrode material with the mass accounting for 6.5% of the mass of the positive electrode material is better. Through more experimental data of the present disclosure, it can be found that the performance of the positive electrode plate prepared when adopting the auxiliary positive electrode material with the mass accounting for 4.0%-12.0% of the mass of the positive electrode active material in the positive electrode active layer is better.

In conclusion, from the experimental results of the examples and the comparative examples in Table 1, it can be seen that the positive electrode plate with the particle size distribution satisfying the relational expression I in the present disclosure can reduce the polarization caused by different SOC in the thickness direction of the positive electrode plate and different SOC between the large and small particles, eliminate the polarization caused by uneven lithium ion intercalation, reduce the battery impedance, and improve the rate and cycle performance. The polyanion positive electrode material has excellent structural stability. Through joint use, not only the cycle performance is improved, but also the safety performance (thermal stability) is improved.

The foregoing embodiments only show several implementations of the present disclosure and are described in detail, but they should not be construed as a limit to the patent scope of the present disclosure. A person of ordinary skill in the art may make various changes and improvements without departing from the ideas of the present disclosure, which shall all fall within the protection scope of the present disclosure. Therefore, the protection scope of the present disclosure is subject to the protection scope of the appended claims.

**Claims**

1. A positive electrode plate, wherein the positive electrode plate comprises a current collector and a positive electrode active layer arranged on the current collector, the positive electrode active layer comprises m positive electrode active sub-layers, a positive electrode active material in each of the positive electrode active sub-layers comprises a main positive electrode material and an auxiliary positive electrode material, and a $D_{50}$ particle size of the main positive electrode material in the positive electrode active layer satisfies

$$1/(\sqrt{2}-1)^{n-1}D_{501} \leq D_{50n} \leq 2(\sqrt{2}+1)^{n-1}D_{501},$$

where the m is an integer equal to or greater than 2, the n is any integer ranging from 2 to m, the $D_{501}$ represents a $D_{50}$ particle size of the main positive electrode material in a first positive electrode active sub-layer, the $D_{50}{}^{n}$ represents a $D_{50}$ particle size of the main positive electrode material in an nth positive electrode active sub-layer, and a distance between the nth positive electrode active sub-layer and the current collector is greater than a distance between a (n-1)th positive electrode active sub-layer and the current collector; and a $D_{90}$ particle size of the auxiliary positive electrode material is smaller than a $D_{10}$ particle size of the main positive electrode material in the first positive electrode active sub-layer.

2. The positive electrode plate according to claim 1, wherein a $D_{50}$ particle size of the auxiliary positive electrode material is smaller than or equal to 200 nm.

3. The positive electrode plate according to claim 1 or 2, wherein a $D_{90}$ particle size of the main positive electrode material in the (n-1)th positive electrode active sub-layer is smaller than or equal to a $D_{10}$ particle size of the main positive electrode material in the nth positive electrode active sub-layer.

4. The positive electrode plate according to claim 3, wherein the particle size of the main positive electrode material in the positive electrode active layer further satisfies 4.0 $\mu m \leq D50[m/2]+1 \leq 8.0$ $\mu m$, the [m/2] represents rounding down, and the $D_{50}^{[m/2]+1}$ represents a $D_{50}$ particle size of the main positive electrode material in a ([m/2]+1)th positive electrode active sub-layer.

5. The positive electrode plate according to any one of claims 1-4, wherein in the positive electrode active layer, a percentage of a surface density of the main positive electrode material in each of the first positive electrode active sub-layer to an mth positive electrode active sub-layer to a surface density of the main positive electrode material in the positive electrode active layer shows a normal distribution.

6. The positive electrode plate according to any one of claims 1-5, wherein in the positive electrode active layer, a percentage of a surface density of the main positive electrode material in each of the positive electrode active sub-layers to a surface density of the main positive electrode material in the positive electrode active layer satisfies:

$$\rho^1 \leq 10.0\%, \ \rho^m \leq 10.0\%;$$

$$\rho^2 \geq 10.0\%, \ \rho^{m-1} \geq 10.0\%;$$

$$40.0\% \leq \rho^{m/2} \leq 60.0\%,$$

where the m is an integer equal to or greater than 3, the $\rho^1$ represents a percentage of a surface density of the main positive electrode material in the first positive electrode active sub-layer to a surface density of the main positive electrode material in the positive electrode active layer, the $\rho^2$ represents a percentage of a surface density of the main positive electrode material in a second positive electrode active sub-layer to the surface density of the main positive electrode material in the positive electrode active layer, the $\rho^m$ represents a percentage of a surface density of the main positive electrode material in the mth positive electrode active sub-layer to the surface density of the main positive electrode material in the positive electrode active layer, and the $\rho^{m-1}$ represents a percentage of a surface density of the main positive electrode material in a (m-1)th positive electrode active sub-layer to the surface density of the main positive electrode material in the positive electrode active layer, wherein when the m is an odd number, the $\rho^{m/2}$ represents a percentage of a surface density of the main positive electrode material in a ([m/2]+1)th positive electrode active sub-layer to the surface density of the main positive electrode material in the positive electrode active layer, and the [m/2] represents rounding down; and when the m is an even number, the $\rho^{m/2}$ represents a percentage of a surface density of the main positive electrode material in at least one of a ([m/2])th positive electrode active sub-layer and the ([m/2]+1)th positive electrode active sub-layer to the surface density of the main positive electrode material in the positive electrode active layer.

7. The positive electrode plate according to any one of claims 1-6, wherein each of the positive electrode active sub-layers further comprises a conductive agent and a binder, a surface density of the positive electrode active layer satisfies 300 g/m$^2 \leq \rho \leq 500$ g/m$^2$, and the $\rho$ represents a surface density of the positive electrode active layer.

8. The positive electrode plate according to any one of claims 1-7, wherein a mass of the auxiliary positive electrode material accounts for 0.5%-20.0% of a mass of the positive electrode active material in the positive electrode active layer.

9. The positive electrode plate according to any one of claims 1-8, wherein the m is an integer ranging from 3 to 6.

10. The positive electrode plate according to any one of claims 1-9, wherein the m is equal to 4.

11. The positive electrode plate according to any one of claims 1-10, wherein the main positive electrode material is a layered positive electrode material; and the auxiliary positive electrode material is a polyanion positive electrode material.

**12.** The positive electrode plate according to claim 11, wherein the layered positive electrode material is at least one of lithium cobaltate, lithium nickelate, lithium manganate, lithium nickel cobalt manganate and lithium nickel cobalt aluminate; and

the polyanion positive electrode material is at least one of lithium iron phosphate, lithium manganese iron phosphate, lithium manganese phosphate, lithium vanadium phosphate, lithium vanadium fluorophosphate, lithium manganese silicate, lithium iron silicate and lithium cobalt silicate.

**13.** A battery, wherein the battery comprises the positive electrode plate according to any one of claims 1-12.

FIG. 1

## INTERNATIONAL SEARCH REPORT

| International application No. |
|---|
| **PCT/CN2021/093563** |

### A. CLASSIFICATION OF SUBJECT MATTER

H01M 4/13(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 正极, 阴极, 活性, 主, 两, 粒度, 粒径, 梯度, 增大, 减小, batter+, cell?, cathode?, electrode?, active?, main, dual, grain, particle, size, diameter, gradual+, decreas+, increas+

### C. DOCUMENTS CONSIDERED TO BE RELEVANT

| Category* | Citation of document, with indication, where appropriate, of the relevant passages | Relevant to claim No. |
|---|---|---|
| A | JP 2019102260 A (TOYOTA JIDOSHA K. K.) 24 June 2019 (2019-06-24) description, paragraphs 11-25, figure 1 | 1-13 |
| A | CN 103746089 A (CENTRAL SOUTH UNIVERSITY) 23 April 2014 (2014-04-23) entire document | 1-13 |
| A | US 2018248188 A1 (SUMITOMO OSAKA CEMENT CO., LTD.) 30 August 2018 (2018-08-30) entire document | 1-13 |
| A | CN 105958051 A (INSTITUTE OF ELECTRONIC ENGINEERING, CHINA ACADEMY OF ENGINEERING PHYSICS) 21 September 2016 (2016-09-21) entire document | 1-13 |
| A | CN 101483235 A (SHENZHEN CAPCHEM TECHNOLOGY CO., LTD.) 15 July 2009 (2009-07-15) entire document | 1-13 |
| A | CN 106252586 A (SHENZHEN BROAD NEW ENERGY TECHNOLOGY CO., LTD.) 21 December 2016 (2016-12-21) entire document | 1-13 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 July 2021** | **28 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/093563**

| Patent document cited in search report | | | Publication date (day/month/year) | Patent family member(s) | | | Publication date (day/month/year) |
|---|---|---|---|---|---|---|---|
| JP | 2019102260 | A | 24 June 2019 | None | | | |
| CN | 103746089 | A | 23 April 2014 | CN | 103746089 | B | 11 May 2016 |
| US | 2018248188 | A1 | 30 August 2018 | JP | 2018142420 | A | 13 September 2018 |
| | | | | JP | 6617312 | B2 | 11 December 2019 |
| CN | 105958051 | A | 21 September 2016 | None | | | |
| CN | 101483235 | A | 15 July 2009 | CN | 101483235 | B | 16 February 2011 |
| CN | 106252586 | A | 21 December 2016 | CN | 106252586 | B | 11 December 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010585072